# EUROPEAN PATENT APPLICATION

(11) **EP 4 509 547 A1**
(43) Date of publication of application: **19.02.2025**
(21) Application number: 23788503.3
(22) Date of filing: 29.03.2023
(51) Int. Cl.: C08G 73/10, C08J 5/18

(54) **POLYIMIDE PRECURSOR**

(30) Priority: 15.04.2022 KR 20220046936; 08.09.2022 KR 20220114070; 27.03.2023 KR 20230039433
(71) Applicant: PI Advanced Materials Co., Ltd., Chungcheongbuk-do 27818 (KR)
(72) Inventor: PARK, Se Joo, Jincheon-gun Chungcheongbuk-do 27818 (KR); WE, Jung Hoon, Jincheon-gun Chungcheongbuk-do 27818 (KR); PARK, Joon Chul, Jincheon-gun Chungcheongbuk-do 27818 (KR); LEE, Ik Sang, Jincheon-gun Chungcheongbuk-do 27818 (KR)
(74) Representative: Eisenführ Speiser
(86) International application number: PCT/KR2023/004166
(87) International publication number: WO 2023/200151

(57) **Abstract**

The present application provides a polyimide precursor capable of simultaneously realizing a low dielectric constant, light resistance, heat resistance, insulation, and mechanical properties under harsh conditions, such as high temperatures, by including a high-molecular-weight polyamic acid, a method of preparing the polyamic acid, a method of increasing a molecular weight of the polyamic acid, a film including the precursor, and a display device having the film attached to a substrate.

## Description

### BACKGROUND

### 1. Field of the Invention

The present application relates to a polyimide precursor including a polyamic acid, a method of preparing the polyamic acid, a method of increasing a molecular weight of the polyamic acid, a film including the precursor, and a display device having the film attached to a substrate.

### 2. Discussion of Related Art

In general, polyimide (PI) is a polymer of an imide monomer formed by solution polymerization of dianhydride and diamine or diisocyanate, and has mechanical properties such as excellent strength, chemical resistance, weather resistance, and heat resistance, based on the chemical stability of an imide ring. In addition, polyimide is attracting attention as a high-functional polymer material applicable to a wide range of industrial fields such as electronics, communication, and optics due to its excellent electrical properties such as insulating property and a low dielectric constant.

Here, the polyimide refers to a highly heat-resistant resin prepared by solution polymerization of a dianhydride monomer and a diamine monomer to prepare a polyamic acid, followed by ring-closure dehydration at a high temperature for imidization.

### SUMMARY OF THE INVENTION

The present application provides a polyimide precursor capable of simultaneously realizing a low dielectric constant, light resistance, heat resistance, insulation, and mechanical properties under harsh conditions, such as high temperatures, by including a high-molecular-weight polyamic acid, a method of preparing the polyamic acid, a method of increasing a molecular weight of the polyamic acid, a film including the precursor, and a display device in which the film is attached to a bottom of a substrate.

The present application relates to a polyimide precursor. For example, the polyimide precursor may be a polyimide varnish that is imidized by thermal curing after being applied to a coating target. The polyimide precursor can realize excellent insulation, adhesion, heat resistance, mechanical strength, light resistance, and flexibility of polyimide, and thus can be used as a substrate attachment material for a display.

An exemplary polyimide precursor according to the present application includes a polyamic acid including a dianhydride monomer and a diamine monomer as polymerization units, and an organic solvent including one or more selected from the group consisting of N,N-diethylacetamide (DEAc), N,N-diethylformamide (DEF), N-ethylpyrrolidone (NEP), dimethylpropionamide (DMPA), and diethylpropionamide (DEPA).

In addition, a weight average molecular weight of the polyamic acid may be in a range of 40,000 to 100,000 g/mol, 45,000 to 90,000 g/mol, 48,000 to 80,000 g/mol, 50,000 to 75,000 g/mol, or 51,000 to 70,000 g/mol. In the present application, the term "weight average molecular weight" means a conversion value for standard polystyrene as measured by gel permeation chromatography (GPC).

The polyimide precursor according to the present invention may be a polyamic acid solution including a polyamic acid and an organic solvent. In the present invention, the polyimide precursor, the polyamic acid solution, and the polyimide varnish are interpreted as the same meaning.

The polyamic acid may be prepared through a polymerization reaction of a dianhydride monomer and a diamine monomer in the presence of the organic solvent. As the polyamic acid of the present invention is polymerized in the organic solvent, a weight average molecular weight may increase to satisfy the above-described numerical range.

As the polyimide precursor according to the present application includes a high-molecular-weight polyamic acid that satisfies the above numerical range, it is possible to provide polyimide with improved mechanical properties and heat resistance characteristics upon imidization.

In one example, the organic solvent may be N,N-dimethylpropionamide (DMPA). Meanwhile, the organic solvent may not include N-methyl-2-pyrrolidone (NMP). A polyamic acid polymerized in the presence of N-methyl-2-pyrrolidone may not satisfy a weight average molecular weight within the above-described range.

In one embodiment, a polydispersity index (PDI) of the polyamic acid may be in a range of 1 to 5. For example, the polydispersity index (PDI) of the polyamic acid may be in a range of 1.1 to 4.9, 1.2 to 4.5, 1.3 to 4.3, 1.4 to 4.0, 1.5 to 3.8, 1.6 to 3.4, 1.7 to 3.2, 1.8 to 3.0, 1.9 to 2.9, 2 to 2.8, or 2.1 to 2.7.

In one embodiment, the dianhydride monomer may be an aromatic tetracarboxylic dianhydride. For example, the dianhydride monomer includes at least one compound represented by Chemical Formula 1 below.

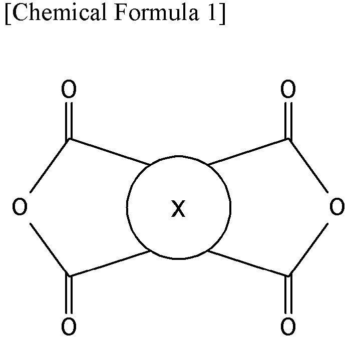

In Chemical Formula 1, X is a tetravalent aliphatic ring group, a tetravalent heteroaliphatic ring group, a tetravalent aromatic ring group, or a tetravalent heteroaromatic ring group, and a carbon atom of the carbonyl group in Chemical Formula 1 is linked to a ring-constituting atom of the aliphatic ring group, the heteroaliphatic ring group, the aromatic ring group or the heteroaromatic ring group, wherein the aliphatic ring group, the heteroaliphatic ring group, the aromatic ring group or the heteroaromatic ring group is a monocyclic ring; is conjugated to each other to form a polycyclic ring; or is linked by a linking group including one or more of divalent substituents selected from the group consisting of a single bond, a substituted or unsubstituted alkylene group, a substituted or unsubstituted alkylidene group, a substituted or unsubstituted alkenylene group, a substituted or unsubstituted alkynylene group, a substituted or unsubstituted arylene group, -O-, -S-, -C(=O)-, -S(=O)₂- and -Si(Rₐ)₂-, wherein Rₐ is hydrogen or an alkyl group.

Preferably, X is phenyl, biphenyl, 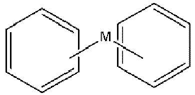 or an aliphatic ring group, and
M includes at least one selected from the group consisting of a single bond, an alkylene group, an alkylidene group, -O-, -S-, -C(=O)-, and -S(=O)₂-.

In this specification, the term "aliphatic ring group" may mean an aliphatic ring group having 3 to 30 carbon atoms, 4 to 25 carbon atoms, 5 to 20 carbon atoms, or 6 to 16 carbon atoms, unless otherwise specified. Specific examples of a tetravalent aliphatic ring group may include, for example, a group obtained by removing four hydrogen atoms from a ring, such as a cyclohexane ring, a cycloheptane ring, a cyclodecane ring, a cyclododecane ring, a norbornane ring, an isobornane ring, an adamantane ring, a cyclododecane ring, and a dicyclopentane ring.

In this specification, the term "aromatic ring group" may mean an aromatic ring group having 4 to 30 carbon atoms, 5 to 25 carbon atoms, 6 to 20 carbon atoms, or 6 to 16 carbon atoms, unless otherwise specified. The aromatic ring may be a monocyclic ring or a condensed ring. Examples of the tetravalent aromatic hydrocarbon ring group include groups obtained by removing four hydrogen atoms from a benzene ring, a naphthalene ring, an anthracene ring, a phenanthrene ring, a perylene ring, a tetracene ring, or a pyrene ring.

In this specification, the term "arylene group" may mean a divalent organic group derived from the aromatic ring group.

The term "heterocyclic group" used herein includes a heteroaliphatic ring group and a heteroaromatic ring group.

In this specification, the term "heteroaliphatic ring group" may refer to a ring group in which at least one of the carbon atoms of the aliphatic ring group is replaced with one or more heteroatoms selected from the group consisting of nitrogen, oxygen, sulfur, and phosphorus.

In this specification, the term "heteroaromatic ring group" may refer to a ring group in which at least one of the carbon atoms of the aromatic ring group is replaced with one or more heteroatoms selected from the group consisting of nitrogen, oxygen, sulfur, and phosphorus, unless otherwise specified. The heteroaromatic ring group may be a monocyclic ring or a condensed ring.

The aliphatic ring group, the heteroaliphatic ring group, the aromatic ring group, or the heteroaromatic ring group may be each independently substituted with one or more substituents selected from the group consisting of halogen, a hydroxyl group, a carboxy group, a halogen-substituted or unsubstituted alkyl group having 1 to 4 carbon atoms, and an alkoxy group having 1 to 4 carbon atoms.

In this specification, the term "single bond" may mean a bond linking both atoms without any other atoms. For example, when X in Chemical Formula 1 is 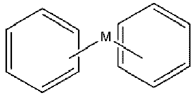 and M is a single bond, both aromatic rings may be directly linked to each other.

In this specification, the term "alkyl group" may mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may have a linear, branched or cyclic structure and may be optionally substituted by one or more substituents. The substituent may be, for example, a polar functional group such as one or more substituents consisting of halogen, a hydroxyl group, an alkoxy group, a thiol group, or a thiol ether group.

**In** this specification, the term "alkenyl group" may mean an alkenyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkenyl group may have a linear, branched or cyclic structure and may be optionally substituted by one or more substituents. The substituent may be, for example, a polar functional group such as one or more substituents consisting of halogen, a hydroxyl group, an alkoxy group, a thiol group, or a thiol ether group.

In this specification, the term "alkynyl group" may mean an alkynyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkynyl group may have a linear, branched or cyclic structure and may be optionally substituted by one or more substituents. The substituent may be, for example, a polar functional group such as one or more substituents consisting of halogen, a hydroxyl group, an alkoxy group, a thiol group, or a thiol ether group.

In this specification, the term "alkylene group" may mean an alkylene group having 2 to 30 carbon atoms, 2 to 25 carbon atoms, 2 to 20 carbon atoms, 2 to 16 carbon atoms, 2 to 12 carbon atoms, 2 to 10 carbon atoms, or 2 to 8 carbon atoms, unless otherwise specified. The alkylene group is a divalent organic group in which two hydrogens are removed from different carbon atoms, may have a linear, branched or cyclic structure, and may be optionally substituted by one or more substituents. The substituent may be, for example, a polar functional group such as one or more substituents consisting of halogen, a hydroxyl group, an alkoxy group, a thiol group, or a thiol ether group.

In this specification, the term "alkylidene group" may mean an alkylidene group having 1 to 30 carbon atoms, 1 to 25 carbon atoms, 1 to 20 carbon atoms, 1 to 16 carbon atoms, 1 to 12 carbon atoms, 1 to 10 carbon atoms, or 1 to 8 carbon atoms, unless otherwise specified. The alkylidene group is a divalent organic group in which two hydrogens are removed from one carbon atom, and may have a linear, branched or cyclic structure and may be optionally substituted by one or more substituents. The substituent may be, for example, a polar functional group such as one or more substituents consisting of halogen, a hydroxyl group, an alkoxy group, a thiol group, or a thiol ether group.

In this specification, the term "alkoxy group" may mean an alkoxy group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkoxy group may have a linear, branched or cyclic alkyl group, and the alkyl group may be optionally substituted with one or more substituents. The substituent may be, for example, one or more substituents consisting of halogen, a hydroxyl group, an alkoxy group, a thiol group, or a thiol ether group.

In this specification, the term "alkylamine group" includes monoalkylamine (-NHR) or dialkylamine (-NR₂), where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted by one or more substituents. The substituent may be, for example, one or more substituents consisting of halogen, a hydroxyl group, an alkoxy group, a thiol group, or a thiol ether group.

In this specification, the term "alkylamide" includes monoalkylamide (-C(O)NHR) or dialkylamide (-C(O)NR₂), where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted by one or more substituents. The substituent may be, for example, one or more substituents consisting of halogen, a hydroxyl group, an alkoxy group, a thiol group, or a thiol ether group.

In this specification, the term "thiol ether group" or "sulfide" means -SR, where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted by one or more substituents. The substituent may be, for example, one or more substituents consisting of halogen, a hydroxyl group, an alkoxy group, a thiol group, or a thiol ether group.

In this specification, the term "sulfoxide" means -S(O)R, where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted by one or more substituents. The substituent may be, for example, one or more substituents consisting of halogen, a hydroxyl group, an alkoxy group, a thiol group, or a thiol ether group.

In this specification, the term "carbonyl" includes -C(O)R, where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted by one or more substituents. The substituent may be, for example, one or more substituents consisting of halogen, a hydroxyl group, an alkoxy group, a thiol group, or a thiol ether group.

In this specification, the term "ester" includes -C(O)OR or -OC(O)R, where R may each independently mean an alkyl group having 1 to 30 carbon atoms, 1 to 25 carbon atoms, 1 to 20 carbon atoms, 1 to 16 carbon atoms, 1 to 12 carbon atoms, 1 to 8 carbon atoms, or 1 to 4 carbon atoms, unless otherwise specified. The alkyl group may be a linear, branched or cyclic alkyl group and may be optionally substituted by one or more substituents. The substituent may be, for example, one or more substituents consisting of halogen, a hydroxyl group, an alkoxy group, a thiol group, or a thiol ether group.

Examples of aliphatic tetracarboxylic dianhydride satisfying Chemical Formula 1 may include 1,2,4,5-cyclohexane tetracarboxylic dianhydride (or HPMDA), bicyclo[2.2.2]octane-2,3, 5,6-tetracarboxylic 2:3,5:6-dianhydride (BODA), 1,2,3,4-cyclohexane tetracarboxylic dianhydride (CHMDA), bicyclo[2.2.1]heptane-2,3,5,6-tetracarboxylic 2:3,5:6-dianhydride (BHDA), butane-1,2,3,4-tetracarboxylic dianhydride (BTD), bicyclo-[2.2.2]oct-7-ene-2-exo,3-exo,5-exo,6-exo-2,3:5,6-dianhydride (BTA), 1,2,3,4-cyclobutane tetracarboxylic dianhydride (CBDA), bicyclo[4.2.0]octane-3,4,7,8-tetracarboxylic dianhydride (OTD), norbonane-2-spiro-α-cyclohexanone-α'-spiro-2"-norbonane-5,5",6,6"-tetracarboxylic dianhydride (ChODA), cyclopentanone bis-spironorbonane tetracarboxylic dianhydride (CpODA), bicyclo[2.2.1]heptane-2,3,5-tricarboxyl-5-acetic dianhydride (BSDA), dicyclohexyl-3,3',4,4'-tetracarboxylic dianhydride (DCDA), dicyclohexyl-2,3'3,4'-tetracarboxylic dianhydride (HBPDA), 5,5'-oxybis(hexahydro-1,3-isobenzofurandione) (HODPA), 5,5'-methylenebis(hexahydro-1,3-isobenzofurandione) (HMDPA), 3,3'-(1,4-piperazindi yl)bis[dihydro-2,5-furandione] (PDSA), 5-(2,5-dioxotetrahydrofurfuryl)-3-methyl-3-cyclohexane-1,2-dicarboxylic anhydride (DOCDA), 3,4-dicarboxy-1,2,3,4-tetrahydro-1-naphthalene succinic dianhydride (TDA), 3,4-dicarboxy-1,2,3,4-tetrahydro-6-methyl-1-naphthalene succinic dianhydride (MTDA), 3,4-dicarboxy-1,2,3,4-tetrahydro-6-fluoro-1-naphthalene succinic dianhydride (FTDA), 3,3,3',3'-tetramethyl-1,1'-spirobisindan-5,5',6,6'-tetracarboxylic anhydride (SBIDA), 4,4,4',4'-tetramethyl-3,3',4,4'-tetrahydro-2,2'-spirobi[furo[3,4-g]chromene]-6,6',8,8'-tetraone (SBCDA), 9,10-difluoro-9,10-bis(trifluoromethyl)-9,10-dihydroanthracene-2,3,6,7-tetracarboxylic acid dianhydride (6FDA) and the like.

Examples of aromatic tetracarboxylic dianhydride satisfying Chemical Formula 1 may include pyromellitic dianhydride (or PMDA), 3,3',4,4'-biphenyltetracarboxylic dianhydride (or BPDA), 2,3,3',4'-biphenyltetracarboxylic dianhydride (or α-BPDA), oxydiphthalic dianhydride (or ODPA), diphenylsulfone-3,4,3',4'-tetracarboxylic dianhydride (or DSDA), bis(3,4-dicarboxyphenyl)sulfide dianhydride, 2,2-bis(3,4-dicarboxyphenyl)-1,1,1,3,3,3-hexafluoropropane dianhydride, 2,3,3',4'-benzophenonetetracarboxylic dianhydride, 3,3',4,4'-benzophenonetetracarboxylic dianhydride (or BTDA), bis(3,4-dicarboxyphenyl)methane dianhydride, 2,2-bis(3,4-dicarboxyphenyl)propane dianhydride, p-phenylenebis(trimellitic monoester acid anhydride), p-biphenylenebis(trimellitic monoester acid anhydride), m-terphenyl-3,4,3',4'-tetracarboxylic dianhydride, p-terphenyl-3,4,3',4'-tetracarboxylic dianhydride, 1,3-bis(3,4-dicarboxyphenoxy)benzene dianhydride, 1,4-bis(3,4-dicarboxyphenoxy)benzene dianhydride, 1,4-bis(3,4-dicarboxyphenoxy)biphenyl dianhydride, 2,2-bis[(3,4-dicarboxyphenoxy)phenyl]propane dianhydride (BPADA), 2,3,6,7-naphthalenetetracarboxylic dianhydride, 1,4,5,8-naphthalenetetracarboxylic dianhydride, 4,4'-(2,2-hexafluoroisopropylidene)diphthalic dianhydride (6-FDA) and the like.

The compound represented by Chemical Formula 1 is preferably an aromatic tetracarboxylic dianhydride and may particularly include 3,3',4,4'-biphenyltetracarboxylic dianhydride (or BPDA), or 2,3, 3',4'-biphenyltetracarboxylic dianhydride (or α-BPDA).

As an example, the diamine monomer may include at least one compound represented by Chemical Formula 2 below.

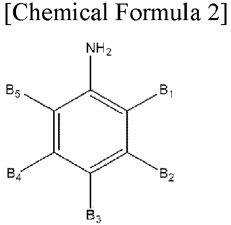

In Chemical Formula 2, any one of B₁ to B₅ is an amino group, and the others are hydrogen; halogen; a hydroxyl group; a carboxyl group; or a halogen-substituted or unsubstituted alkyl group.

In addition, the diamine monomer that can be used for preparing the polyamic acid solution is an aromatic diamine, and may be classified as follows.
1) Diamines having one benzene nucleus in their structure, for example diamines having a relatively rigid structure, such as 1,4-diaminobenzene (or p-phenylenediamine, PPD), 1,3-diaminobenzene, 2,4-diaminotoluene, 2,6-diaminotoluene, or 3,5-diaminobenzoic acid (or DABA);
2) Diamines having two benzene nuclei in structure, such as diaminodiphenyl ethers such as 4,4'-diaminodiphenyl ether (or oxydianiline, ODA) and 3,4'-diaminodiphenyl ether, 4,4'-diaminodiphenylmethane (methylenediamine), 3,3'-dimethyl-4,4'-diaminobiphenyl, 2,2'-dimethyl-4,4'-diaminobiphenyl, 2,2'-bis(trifluoromethyl)-4,4'-diaminobiphenyl, 3,3'-dimethyl-4,4'-diaminodiphenylmethane, 3,3'-dicarboxy-4,4'-diaminodiphenylmethane, 3,3',5,5'-tetramethyl-4,4'-diaminodiphenylmethane, bis(4-aminophenyl)sulfide, 4,4'-diaminobenzanilide, 3,3'-dichlorobenzidine, 3,3'-dimethylbenzidine (or o-tolidine), 2,2'-dimethylbenzidine (or m-tolidine), 3,3'-dimethoxybenzidine, 2,2'-dimethoxybenzidine, 3,3'-diaminodiphenyl ether, 3,4'-diaminodiphenyl ether, 4,4'-diaminodiphenyl ether, 3,3'-diaminodiphenylsulfide, 3,4'-diaminodiphenylsulfide, 4,4'-diaminodiphenylsulfide, 3,3'-diaminodiphenylsulfone, 3,4'-diaminodiphenylsulfone, 4,4'-diaminodiphenylsulfone, 3,3'-diaminobenzophenone, 4,4'-diaminobenzophenone, 3,3'-diamino-4,4'-dichlorobenzophenone, 3,3'-diamino-4,4'-dimethoxybenzophenone, 3,3'-diaminodiphenylmethane, 3,4'-diaminodiphenylmethane, 4,4'-diaminodiphenylmethane, 2,2-bis(3-aminophenyl)propane, 2,2-bis(4-aminophenyl)propane, 2,2-bis(3-aminophenyl)-1,1,1,3,3,3-hexafluoropropane, 2,2-bis(4-aminophenyl)-1,1,1,3,3,3-hexafluoropropane, 3,3'-diaminodiphenylsulfoxide, 3,4'-diaminodiphenylsulfoxide, or 4,4'-diaminodiphenylsulfoxide;
3) Diamine having three benzene nuclei in structure, such as 1,3-bis(3-aminophenyl)benzene, 1,3-bis(4-aminophenyl)benzene, 1,4-bis(3-aminophenyl)benzene, 1,4-bis(4-aminophenyl)benzene, 1,3-bis(4-aminophenoxy)benzene, 1,4-bis(3-aminophenoxy)benzene (or TPE-Q), 1,4-bis(4-aminophenoxy)benzene (or TPE-Q), 1,3-bis(3-aminophenoxy)-4-trifluoromethylbenzene, 3,3'-diamino-4-(4-phenyl) phenoxybenzophenone, 3,3'-diamino-4,4'-di(4-phenylphenoxy)benzophenone, 1,3-bis(3-aminophenylsulfide)benzene, 1,3-bis(4-aminophenylsulfide)benzene, 1,4-bis(4-aminophenylsulfide)benzene, 1,3-bis(3-aminophenylsulfone)benzene, 1,3-bis(4-aminophenylsulfone)benzene, 1,4-bis(4-aminophenylsulfone)benzene, 1,3-bis[2-(4-aminophenyl)isopropyl]benzene, 1,4-bis[2-(3-aminophenyl)isopropyl]benzene, or 1,4-bis[2-(4-aminophenyl)isopropyl]benzene;
4) Diamines having four benzene nuclei in structure, such as 3,3'-bis(3-aminophenoxy)biphenyl, 3,3'-bis(4-aminophenoxy)biphenyl, 4,4'-bis(3-aminophenoxy)biphenyl, 4,4'-bis(4-aminophenoxy)biphenyl, bis[3-(3-aminophenoxy)phenyl]ether, bis[3-(4-aminophenoxy)phenyl]ether, bis[4-(3-aminophenoxy)phenyl]ether, bis[4-(4-aminophenoxy)phenyl]ether, bis[3-(3-aminophenoxy)phenyl]ketone, bis[3-(4-aminophenoxy)phenyl]ketone, bis[4-(3-aminophenoxy)phenyl]ketone, bis[4-(4-aminophenoxy)phenyl]ketone, bis[3-(3-aminophenoxy)phenyl]sulfide, bis[3-(4-aminophenoxy)phenyl] sulfide, bis[4-(3-aminophenoxy)phenyl]sulfide, bis[4-(4-aminophenoxy)phenyl]sulfide, bis[3-(3-aminophenoxy)phenyl]sulfone, bis[3-(4-aminophenoxy)phenyl]sulfone, bis[4-(3-aminophenoxy)phenyl]sulfone, bis[4-(4-aminophenoxy)phenyl]sulfone, bis[3-(3-aminophenoxy)phenyl]methane, bis[3-(4-aminophenoxy)phenyl]methane, bis[4-(3-aminophenoxy)phenyl]methane, bis[4-(4-aminophenoxy)phenyl]methane, 2,2-bis[3-(3-aminophenoxy)phenyl]propane, 2,2-bis[3-(4-aminophenoxy)phenyl]propane, 2,2-bis[4-(3-aminophenoxy)phenyl]propane, 2,2-bis[4-(4-aminophenoxy)phenyl]propane (BAPP), 2,2-bis[3-(3-aminophenoxy)phenyl]-1,1,1,3,3,3-hexafluoropropane, 2,2-bis[3-(4-aminophenoxy)phenyl]-1,1,1,3,3,3-hexafluoropropane, 2,2-bis[4-(3-aminophenoxy)phenyl]-1,1,1,3,3,3-hexafluoropropane, or 2,2-bis[4-(4-aminophenoxy)phenyl]-1,1,1,3,3,3-hexafluoropropane.

The diamine monomer may be used alone or in combination of two or more, if necessary, and in the present application, in consideration of the above-described bond dissociation energy, the diamine monomer may include, for example, 1,4-diaminobenzene (PPD), 1,3-diaminobenzene (MPD), 2,4-diaminotoluene, 2,6-diaminotoluene, or 4,4'-methylenediamine (MDA), and preferably the compound represented by Chemical Formula 2 may include 1,4-diaminobenzene (PPD).

In one specific example, the polyimide precursor may include 5 to 40% by weight, 10 to 30% by weight, or 15 to 20% by weight of a solid content based on a total weight. In the present application, by controlling a solid content of the polyimide precursor, it is possible to prevent an increase in manufacturing cost and process time, which is caused by removing a large amount of solvent during a curing process, while controlling an increase in viscosity.

In one specific example, the polyamic acid may be in a range of 1 to 50% by weight based on the total solid content. As an example, the range may be 3 to 40% by weight, 5 to 30% by weight, or 10 to 20% by weight. When the range is less than 1% by weight, the uniformity of the coating layer of a varnish is reduced, conversely, when exceeds 40% by weight, storage stability becomes poor.

The polyimide precursor of the present application may include a high-molecular-weight polyamic acid and at the same time have low viscosity characteristics. The polyimide precursor of the present application may have a viscosity of 50,000 cP or less, 40,000 cP or less, 30,000 cP or less, 20,000 cP or less, 10,000 cP or less, 9,000 cP or less, 5,000 cP or less, 4,000 cP or less, or 3,000 cP or less, as measured at a temperature of 23 °C and a shear rate of 1 s⁻¹. The lower limit is not particularly limited, but may be 500 cP or more or 1,000 cP or more. In one embodiment, the viscosity of the polyimide precursor of the present application may be in a range of 500 to 10,000 cP. The viscosity may be measured using, for example, Haake's MARS40 at 23 °C. The present application can provide a polyimide precursor with excellent processability and easy product application by adjusting the viscosity range.

The present application relates to a method of preparing a polyamic acid. The above preparation method may provide a polyamic acid having a high weight average molecular weight by polymerizing the polyamic acid in a specific solvent. Hereinafter, a detailed description overlapping with the foregoing will be omitted.

Specifically, the preparation method may include polymerizing a dianhydride monomer and a diamine monomer using an organic solvent including one or more selected from the group consisting of N,N-diethylacetamide (DEAc), N,N-diethylformamide (DEF), N-ethylpyrrolidone (NEP), dimethylpropionamide (DMPA), and diethylpropionamide (DEPA).

The present application also relates to a method of increasing a molecular weight of a polyamic acid. Specifically, the present application relates to a method of increasing a molecular weight of a polyamic acid including a polymerization unit derived from a dianhydride monomer and a diamine monomer using an organic solvent including at least one of the above-mentioned compounds.

As polymerization is performed in the organic solvent, a weight average molecular weight of the polyamic acid increases, and specifically, it is eco-friendly and has an increased weight average molecular weight compared to the case of using NMP as an organic solvent, thereby providing polyimide with improved mechanical properties and heat resistance during imidization.

More specifically, a weight average molecular weight of the polyamic acid may be in a range of 40,000 g/mol to 100,000 g/mol.

The present application also relates to a film including the above-described polyimide precursor. The film may be attached to a substrate of a display device.

Accordingly, the film may be formed to have a low thickness suitable for being attached to a product, and, for example, the thickness may be within a range of 1 to 100 µm, 5 to 90 µm, 5 to 80 µm, 5 to 70 µm, 10 to 100 µm, 10 to 90 µm, 10 to 80 µm, 10 to 70 µm, 10 to 60 µm, 10 to 50 µm, 20 to 100 µm, 20 to 90 µm, 20 to 80 µm, 20 to 70 µm, 20 to 60 µm, or 20 to 50 µm.

In addition, various physical properties of the film may be controlled in a numerical range as follows by adjusting a material and content ratio of the above-described polyimide precursor composition.

For example, the film may have an elongation of 100% or less, 95% or less, 90% or less, 85% or less, 80% or less, 75% or less, 70% or less, 65% or less, 60% or less, 55% or less, 50% or less, 45% or less, 40% or less, 35% or less, 30% or less, or 25% or less, a tensile strength of 700 MPa or less, 650 MPa or less, 600 MPa or less, 550 MPa or less, 500 MPa or less, 450 MPa or less, 400 MPa or less, 350 MPa or less, 300 MPa or less, 250 MPa or less, 200 MPa or less, or 150 MPa or less, and a modulus of 12 GPa or less, 11 GPa or less, 10 GPa or less, 9 GPa or less, 8 GPa or less, 7 GPa or less, 6 GPa or less, 5 GPa or less, 4 GPa or less, or 3 GPa or less, as measured using a universal testing machine (UTM) device. The measurement may be performed using a UTM device under conditions of a width of 20 mm, a grip distance of 50 mm, and a crosshead speed of 20 min/min.

In addition, the film may have a coefficient of thermal expansion (CTE) of 0.1 ppm/°C to 50 ppm/°C, 0.5 ppm/°C to 50 ppm/°C, 1 ppm/°C to 50 ppm/°C, 5 ppm/°C to 50 ppm/°C, 10 ppm/°C to 45 ppm/°C, 15 ppm/°C to 40 ppm/°C, 20 ppm/°C to 40 ppm/°C, 25 ppm/°C to 40 ppm/°C, or 25 ppm/°C to 35 ppm/°C, as measured using a thermomechanical analysis (TMA) device. The measurement may be performed while applying a load of 0.02 N using a TMA device in a temperature range of 50 to 200 °C at a temperature increase rate of 10 °C/min.

In addition, the film may have a 1% thermal decomposition temperature (td) of 300 to 600 °C, 350 to 600 °C, 400 to 600 °C, 450 to 600 °C, 500 to 600 °C, or 540 to 600 °C, as measured using a thermogravimetric analysis (TGA) device. The measurement may be performed using a TGA device at a temperature increase rate of 10 °C/min for 30 minutes after preheating to a temperature of 150 °C.

The present application also relates to a display device. For example, the device includes a substrate; and the above-described film adhered to the substrate. A type of the display device is not particularly limited, and various types can be applied without limitation. As the above-described film is attached to the substrate, the display device may have excellent heat resistance, light resistance, and electrical characteristics.

### DETAILED DESCRIPTION OF EXEMPLARY EMBODIMENTS

Although the present application is described in detail through the following examples, the scope of the present application is not limited by the following examples.

### Example

Into a 500 mL glass reaction vessel equipped with a stirrer and a nitrogen gas inlet and outlet tube, 417 g ofN,N-dimethylpropionamide (DMPA), 21.7 g (0.2 mol) of 1,4-diaminobenzene (PPD) and 59.1 g (0.2 mol) of 3,3',4,4'-biphenyltetracarboxylic dianhydride (BPDA) were input and polymerized at 25 °C to prepare a polyamic acid solution having a solid content of 15%.

### Comparative Example

Into a 500 mL glass reaction vessel equipped with a stirrer and a nitrogen gas inlet and outlet tube, 417 g of N-methyl-2-pyrrolidone (NMP), 21.7 g (0.2 mol) of 1,4-diaminobenzene (PPD) and 59.1 g (0.2 mol) of 3,3',4,4'-biphenyltetracarboxylic dianhydride (BPDA) were input and polymerized at 25 °C to prepare a polyamic acid solution (polyimide precursor) having a solid content of 15%.

### 1. Viscosity measurement

The viscosity of the polyamic acid solutions prepared in Example and Comparative Example was measured using Haake's MARS40 at a temperature of 23 °C, and the results are shown in Table 1 below.

**[Table 1]**

| | Viscosity |
|---|---|
| Example | 2,100 cP |
| Comparative Example | 2,100 cP |

### 2. Weight average molecular weight (Mw) measurement

The polyamic acid solutions of Example and Comparative Example were repeatedly prepared to prepare four samples (Example: Samples 1 to 4, Comparative Example: Samples 5 to 8).

The weight average molecular weight of the polyamic acids in each sample was measured using GPC, and the results are shown in Table 2 below.

**[Table 2]**

| | Example | | | | Comparative Example | | | |
|---|---|---|---|---|---|---|---|---|
| | Sample 1 | Sample 2 | Sample 3 | Sample 4 | Sample 5 | Sample 6 | Sample 7 | Sample 8 |
| Mw | 58,960 | 51,340 | 58,658 | 60,250 | 30,952 | 34,026 | 34,212 | 36,600 |

As shown in Table 2, it was confirmed that Example using DMPA as a solvent had a higher weight average molecular weight than Comparative Example using NMP as a solvent.

The present application provides a polyimide precursor capable of simultaneously realizing a low dielectric constant, light resistance, heat resistance, insulation, and mechanical properties under harsh conditions, such as high temperatures, by including a high-molecular-weight polyamic acid, a method of preparing the polyamic acid, a method of increasing a molecular weight of the polyamic acid, a film including the precursor, and a display device having the film attached to a substrate.

## Claims

1. A polyimide precursor comprising:
a polyamic acid including a dianhydride monomer and a diamine monomer as polymerization units; and
an organic solvent including one or more selected from the group consisting of N,N-diethylacetamide (DEAc), N,N-diethylformamide (DEF), N-ethylpyrrolidone (NEP), dimethylpropionamide (DMPA), and diethylpropionamide (DEPA);
wherein a weight average molecular weight of the polyamic acid is in a range of 40,000 g/mol to 100,000 g/mol.

2. The polyimide precursor of claim 1, wherein the polyamic acid has a polydispersity index (PDI) in a range of 1 to 5.

3. The polyimide precursor of claim 1, wherein the organic solvent is N,N-dimethylpropionamide (DMPA).

4. The polyimide precursor of claim 1, wherein the dianhydride monomer includes at least one of compounds represented by Chemical Formula 1 below: 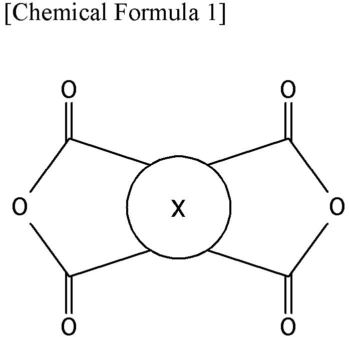
In Chemical Formula 1, X is a tetravalent aliphatic ring group, a tetravalent heteroaliphatic ring group, a tetravalent aromatic ring group, or a tetravalent heteroaromatic ring group, and a carbon atom of a carbonyl group in Chemical Formula 1 is linked to a ring-constituting atom of the aliphatic ring group, the heteroaliphatic ring group, the aromatic ring group, or the heteroaromatic ring group,
wherein the aliphatic ring group, the heteroaliphatic ring group, the aromatic ring group, or the heteroaromatic ring group is a monocyclic ring; is conjugated to each other to form a polycyclic ring; or is linked by a linking group including one or more of divalent substituents selected from the group consisting of a single bond, a substituted or unsubstituted alkylene group, a substituted or unsubstituted alkylidene group, a substituted or unsubstituted alkenylene group, a substituted or unsubstituted alkynylene group, a substituted or unsubstituted arylene group, -O-, - S-, -C(=O)-, -S(=O)₂- and -Si(Rₐ)₂-, wherein Rₐ is hydrogen or an alkyl group.

5. The polyimide precursor of claim 4,
wherein X is phenyl, biphenyl, 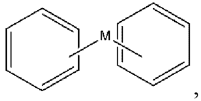 or an aliphatic ring group, and
M includes at least one selected from the group consisting of a single bond, an alkylene group, an alkylidene group, -O-, -S-, -C(=O)-, and -S(=O)₂-.

6. The polyimide precursor of claim 4, wherein the compound represented by Chemical Formula 1 includes 3,3',4,4'-biphenyltetracarboxylic dianhydride (BPDA).

7. The polyimide precursor of claim 1, wherein the diamine monomer includes at least one of compounds represented by Chemical Formula 2 below: 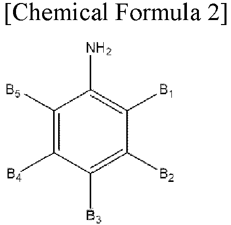 In Chemical Formula 2, any one of B₁ to B₅ is an amino group, and the others are hydrogen; halogen; a hydroxyl group; a carboxyl group; or a halogen-substituted or unsubstituted alkyl group.

8. The polyimide precursor of claim 1, wherein the compound represented by Chemical Formula 2 includes 1,4-diaminobenzene (PPD).

9. The polyimide precursor of claim 1, wherein the polyamic acid is in a range of 1 to 50% by weight based on a total solid content.

10. The polyimide precursor of claim 1, wherein a viscosity measured at conditions of a temperature of 23 °C and a shear rate of 1 s⁻¹ is in a range of 500 to 10,000 cP.

11. A method of preparing a polyamic acid, comprising polymerizing a dianhydride monomer and a diamine monomer using an organic solvent including one or more selected from the group consisting of N,N-diethylacetamide (DEAc), N,N-diethylformamide (DEF), N-ethylpyrrolidone (NEP), dimethylpropionamide (DMPA), and diethylpropionamide (DEPA).

12. A method of increasing a molecular weight of a polyamic acid comprising polymerization units derived from a dianhydride monomer and a diamine monomer using an organic solvent including one or more selected from the group consisting of N,N-diethylacetamide (DEAc), N,N-diethylformamide (DEF), N-ethylpyrrolidone (NEP), dimethylpropionamide (DMPA), and diethylpropionamide (DEPA).

13. The method of claim 12, wherein a weight average molecular weight of the polyamic acid is in a range of 40,000 g/mol to 100,000 g/mol.

14. A film comprising the polyimide precursor of claim 1.

15. The film of claim 14, wherein a thickness is in a range of 1 to 100 µm.

16. The film of claim 14, wherein an elongation is 100% or less, a tensile strength is 700 MPa or less, and a modulus is 12 GPa or less.

17. The film of claim 14, wherein a coefficient of thermal expansion (CTE) is in a range of 0.1 ppm/°C to 50 ppm/°C.

18. The film of claim 14, wherein a 1% thermal decomposition temperature (td) is in a range of 300 to 600 °C.

19. A display device comprising:
a substrate; and
the film of claim 14 attached to the substrate.
